# EUROPEAN PATENT APPLICATION

(11) **EP 0 935 355 A2**
(43) Date of publication of application: **11.08.1999**
(21) Application number: 99300558.6
(22) Date of filing: 26.01.1999
(51) Int. Cl.: H04B 10/08

(54) **A system and method for monitoring and characterizing optical links**

(30) Priority: 05.02.1998 US 19213
(71) Applicant: LUCENT TECHNOLOGIES INC., Murray Hill, New Jersey 07974-0636 (US)
(72) Inventor: Jennings, Mark R., Andover, New Jersey 07821 (US); Pimpinella, Richard Joseph, Hampton, New Jersey 08827 (US); Leone, Frank Salvatore, Berkeley Heights, New Jersey 07922 (US)
(74) Representative: Johnston, Kenneth Graham

(57) **Abstract**

The present invention provides a system and method for monitoring and characterizing optical links of a communication system by transmitting and receiving optical test signals of a certain wavelength through the optical links where such test signals do not interfere in a significant manner with other optical signals being conveyed through the optical links.

## Description

### Background of the Invention

### Field of the Invention

The present invention relates to the monitoring of optical communication links and more particularly to a system and method of monitoring and characterizing optical links in a communication system while communication signals are being conveyed through such links.

### Description of the related an

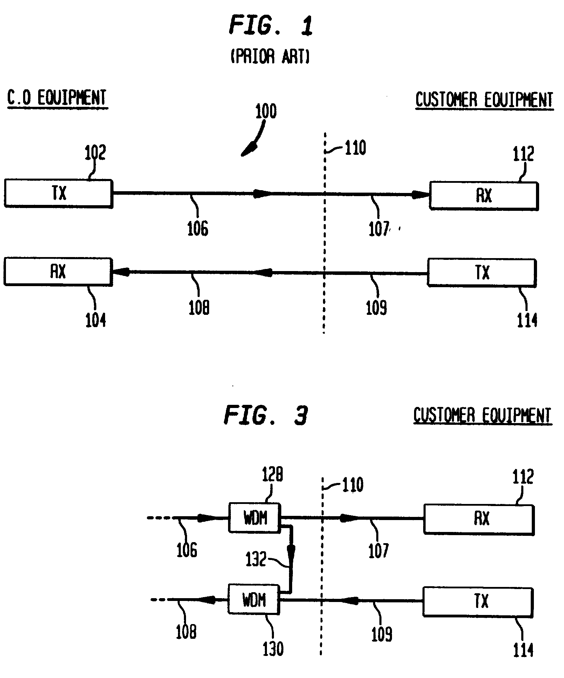

Communication systems many times use optical links to provide communication services to users by conveying communication signals between various equipment within the system. An optical link comprises at least one optical fiber through which optical communication signals (hereinafter "optical signals") representing data, video, audio and other types of information are conveyed. Communication system providers typically own the optical links and associated equipment connected to such links. FIG. 1 depicts an exemplary communication system 100 that uses optical links to convey optical signals between a Central Office and a customer site. For the sake of clarity, only one customer site is shown connected to central office equipment. An actual communication system may, for example, contain hundreds or even thousands of customer sites and various remote terminal equipment sites positioned throughout the communication system.

Communication system 100 comprises system provider equipment and customer equipment, i.e., equipment owned and controlled by the system provider and the customer respectively. Demarcation line 110 is a symbolic representation of some type of physical boundary between user equipment and system equipment. Demarcation line 110 identifies equipment which serve to couple system provider equipment to customer equipment. For example, demarcation line 110 can be some type of enclosure, e.g., a network interface unit (not shown), within which optical links from the communication system terminate and are coupled to optical links from the customer which also terminate within the network interface unit. The network interface unit may be located at the customer site or nearby the customer site.

Transmitter 102 launches optical signals to the customer equipment via optical links 106 and 107. Receiver 104 receives optical signals from the customer equipment via optical links 108 and 109. At the customer site, optical signals are received and transmitted by receiver 112 and transmitter 114 respectively. Optical links 107 and 109, which are owned and controlled by the customer, are commonly referred to as local links. Optical links 106 and 108 will be referred to herein as system optical links. Typically, at the customer site and at the central office, the received optical signals are converted to electrical signals that are processed by electronic circuitry (not shown).

Many times signal degradation occurs at a particular optical link (system and local links) or a group of links (system and local) within the communication system. Signal degradation is defined as situations in which various factors or conditions affect adversely the quality of an optical signal being conveyed through a communication system (such as the one depicted in FIG. 1) resulting in unintelligible communications or an unacceptable error rate in the received optical signals. When signal degradation occurs, the integrity of the particular system links is often questioned. The integrity of an optical link relates to many factors which contribute to the proper functioning of the optical link. For example, the physical condition of a link, the physical characteristics of a link, the topology of an entire link or segments of a link are some of the factors that contribute to the proper functioning of an optical link. The characterization of an optical link is based on the integrity of such a link. For example, an optical link can be characterized as nonfunctional because a point on the link has been determined to be in poor physical condition (e.g., damaged link segment, part of link has poor optical characteristics) resulting in signal degradation.

When the integrity of a particular optical link is in question, the system provider is responsible for determining whether the signal degradation is due to a system optical link, a local link or customer equipment. In order to determine the cause of the signal degradation, the system optical link must be disconnected and analyzed manually by craftpersons who are under the employ of the system provider. The disconnection of the system optical link usually involves severing temporarily each of the optical fibers of the system optical link at one or more points or disconnecting the fibers at certain connection points. The severed or disconnected fibers are tested individually by the craftsperson and are then spliced or reconnected to the remainder of the link once the craftperson determines that the fiber is functioning properly; this procedure is repeated until the entire system optical link has been tested. Not only is it costly and time consuming to analyze and test a system optical link in the manner described above, but during such testing service to the customer is interrupted for an indefinite period of time. Moreover, in many instances such testing is found to be unnecessary after the fact because the signal degradation is due to a nonfunctioning local link or customer equipment failure.

Therefore, there exists a need for a cost effective method of monitoring optical links of a communication system to characterize or determine the integrity of such links without having to interrupt service to customers of the communication system and without having to sever, test and analyze each of the fibers within the optical links.

### Summary of the Invention

The present invention provides a system and method for monitoring and characterizing optical links of a communication system with the use of a test signal without interfering with communication signals being conveyed throughout the communication system. The system comprises a first device through which optical signals are transmitted and received. The optical signals being conveyed via the optical links comprise optical signals having one wavelength and other optical signals having wavelengths different from the one wavelength. The system further comprises a second device coupled to the first device where said second device is configured to monitor and characterize the optical links based on the received optical signals having the one wavelength.

### Brief Description of the Drawings

FIG. 1 is a simplified system level diagram of a prior art communication system having an optical communication link;
FIG. 2 is a diagram of the present invention integrated within a communication system;
FIG. 3 depicts the customer site portion of FIG. 2 where all of the test equipment is owned and under the control of the system provider.

### Detailed Description

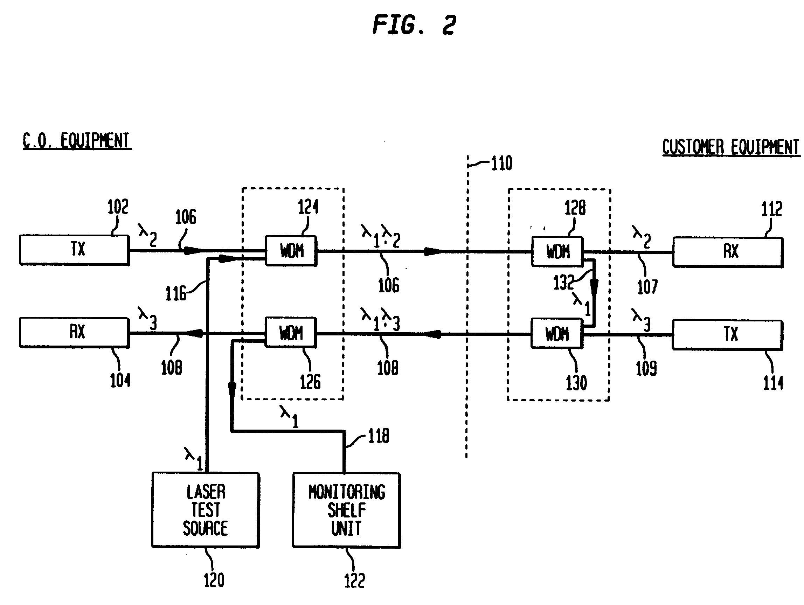

FIG. 2 depicts a communication system in which Wavelength Division Multiplexers (124, 126, 128 and 130) are attached to both ends of system optical links 106 and 108 such that a test signal having one wavelength is conveyed via optical links 106 and 108 while other optical signals having wavelengths different from the one wavelength are conveyed also via optical links 106 and 108 without interfering with the test signal allowing the system optical links (106, 108) to be monitored and characterized by monitoring shelf unit 122 which is coupled to WDM 126 via optical link 118. It will be readily understood that although the customer equipment is connected to the Central Office equipment via two unidirectional optical links (106, 108), the customer equipment can be connected to the Central Office equipment with one or more unidirectional or bidirectional optical links.

Wavelength Division Multiplexers (WDM) are devices with at least one input and at least one output through which optical signals of various wavelengths are received and transmitted where said optical signals are processed (e.g., amplify, attenuate, combine, separate) independently of each other. It will be readily understood that other devices or combination of devices which can be configured to perform the functions of Wavelength Division Multiplexers can also be used. For economy of text and for the sake of clarity, the various optical signals discussed herein will be denoted in term of their wavelengths, λ_{*n*}.

Still referring to FIG. 2, laser test source 120 generates optical signals having wavelength λ₁ which are fed to an input of WDM 124. Other optical signals of wavelength λ₂ originating from Transmitter 102 are fed to another input of WDM 124. Both signals (λ₁, λ₂) are transmitted through WDM 124 and onto optical link 106. The signals are received by WDM 128 which allows the λ₂ signals to pass through to Receiver 112 via local link 107 and routes the λ₁ signals to an input of WDM 130 via loopback link 132. Transmitter 114 generates optical signals of wavelength λ₃ which is fed to another input of WDM 130. The signals (λ₁, λ₃) are transmitted through WDM 130 to the central office via system optical link 108. Note that the λ₂ signals may have the same or substantially the same wavelength as the λ₃ signals as some communication systems transmit and receive optical signals having the same or substantially equal wavelengths. Thus, the λ₂ and λ₃ signals are used by the system and its users for communication and the λ₁ signals are used as test signals for monitoring and characterizing system optical links 106 and 108.

Even though the λ₁ and λ₃ signals are being conveyed simultaneously through system optical link 108, there is virtually little or no interference between the two signals because their wavelengths are sufficiently different from each other precluding any significant interaction between them that would cause any significant signal degradation. Similarly, there is little or no interaction between the λ₁ and λ₂ signals which are conveyed simultaneously through system optical link 106. WDM 126 receives the optical signals (λ₁, λ₃) from WDM 130 and allows the λ₁ signals to pass through to monitoring shelf unit 122 via link 118. The λ₃ signals pass through WDM 126 to receiver 104 via link 108. It will be readily understood by those skilled in the art to which this invention belongs that the transmitters (102, 114) can launch optical signals having more than one wavelength and the receivers (104, 112) can are configured to receive such multi-wavelength optical signals. The multi-wavelength signals are chosen such that they substantially do not interfere with the test signal (λ₁).

Monitoring shelf unit 122 has equipment, well known to those skilled in the art, which is capable of detecting any signal degradation and where in the system optical links such degradation has occurred. Monitoring shelf unit 122 detects signal degradation by monitoring the λ₁ signals after such signals have propagated through the system optical links. Monitoring shelf unit 122 not only has the capability to detect the signal degradation, but it can also analyze the received λ₁ signals to identify the cause of the signal degradation. Through various well known techniques, monitoring shelf unit 122 is thus able to characterize the system optical links based on the received optical signals (λ₁). For example, based on the received λ₁ signals, monitoring shelf unit 122 can characterize system optical links 106 and 108 as marginally functional because signal degradation has been detected and found to be due to excessive attenuation of the optical signals at some point in system optical link 108. The detected signal degradation may also be characterized as the result of improperly functioning customer equipment. Additionally, monitoring shelf unit 122 can document the extent of the signal degradation, the time of occurrence of the signal degradation of certain optical links and record the number of failures occurring in a specific optical link during a certain period of time. The λ₃ optical signals are routed to Receiver 104 via link 108. Therefore, the Central Office equipment can communicate with customer equipment via optical links while simultaneously allowing the optical links to be monitored and characterized on a continuous, continual, periodic or aperiodic basis to determine the health of the communication link, or cause and location of the signal degradation.

Monitoring shelf unit 122 can or in concert with a central processing unit perform statistical analysis of the system and /or local optical links (i.e., one link, a plurality of links, segments of one or a plurality of links) for a short term history (e.g., hourly, daily, weekly, monthly) of the integrity of the system optical links. Thus, for example, once a signal degradation condition is detected, monitoring shelf unit 122 records the time of occurrence, the magnitude of the occurrence and its characterization of the optical link in which the signal degradation condition has occurred. The recorded information can be analyzed by the customer and/or the system provider to determine which of the two entities is responsible for the occurrence of the signal degradation. Thus, the system provider and/or the customer can use a monitor shelf unit to perform statistical analysis on segments of links, on an entire link or on portions of the communication system. The statistical analysis performed by the monitoring shelf unit can be done automatically without having to dispatch a craftsperson thus reducing maintenance costs associated with the system. The results of the statistical analysis can be helpful in establishing measures (e.g., replacing link segments after a certain number of failures) that reduce the occurrence of link failures and consequently help reduce the occurrence of signal degradation.

Referring to FIG. 3, WDM 128 and 130 are located at the system side of demarcation line 110 and are thus owned by the system provider. With this arrangement, the customer need not incur the cost of the test equipment (WDM 128, 130, loopback link 132) needed to practice the present invention as such equipment would be under the control and ownership of the system provider. The test equipment may be located at an appropriate location that is accessible to the system links (106, 108) and the local links (107, 109).

## Claims

1. A system for monitoring and characterizing optical links of a communication system, the system CHARACTERIZED BY:
a first device (126) through which optical signals are transmitted and received, the optical signals being conveyed via the optical links (106, 108) comprise optical signals having one wavelength (λ₁) and other optical signals having wavelengths (λ₂ λ₃) different from the one Wavelength; and
a second device (122) coupled to the first device and configured to monitor and characterize the optical links based on the received optical signals having the one wavelength.

2. The system of claim 1 where the wavelengths of the other optical signals are sufficiently different from the one wavelength such that the other optical signals do not interfere significantly with the optical signals having the one wavelength.

3. The system of claim 1 where the first device is a Wavelength Division Multiplexer (126).

4. The system of claim 1 where the second device is a monitoring shelf unit (122) configured to receive and analyze optical signals having the one wavelength in order to detect signal degradation.

5. The system of claim 1 where the first device is coupled to the second device with the use of an optical link (118).

6. The system of claim 1 where the second device is configured to perform statistical analysis on the optical links to help establish measures that reduce link failures and thus reduce the occurrence of signal degradation.

7. A system for monitoring and characterizing optical links of a communication system, the system CHARACTERIZED BY:
at least a first optical link (106) having a first end and a second end;
at least a second optical link (108) having a first end and a second end;
a first Wavelength Division Multiplexer (124) through which optical signals comprising at least one optical signal having one wavelength (λ₁) and other optical signals having wavelengths (λ₂ λ₃) different from the one wavelength are transmitted and received and which is connected to the first end of the first of the first optical link;
a second Wavelength Division Multiplexer (128) through which the optical signals are transmitted and received and which is connected to the second end of the first optical link;
a third Wavelength Division Multiplexer (130) through which optical signals are transmitted and received and which is connected to the second end of the second optical link and has an input coupled to an output of the second Wavelength Division Multiplexer;
a fourth Wavelength Division Multiplexer (126) connected to the first end of the second optical link;
a monitoring shelf unit (122) coupled to an output of the fourth Wavelength Division Multiplexer and configured to receive and analyze the at least one optical signal having the one wavelength (λ₁) for monitoring and characterizing the at least first and second optical links.

8. The system of claim 7 where the second Wavelength Division Multiplexer is configured to loop back the optical signal from the first optical link (106) to the second optical link (108) via an optical link connected between an output of the second Wavelength Division Multiplexer and an input of the third Wavelength Division Multiplexer.

9. The system of claim 7 where the monitoring shelf unit is coupled to an output of the fourth Wavelength Division Multiplexer with an optical link (118).

10. A method for monitoring and characterizing optical links of a communication system, the method CHARACTERIZED BY THE STEPS OF :
transmitting at least one optical signal having one wavelength and other optical signals having wavelengths different from the one wavelength through at least one optical link;
receiving the at least one optical signal via another optical link; and
analyzing the at least one optical signal to monitor and characterize the at least one optical link and the other optical link.

11. The method of claim 10 wherein the step of transmitting the at least one optical signal having one wavelength and other optical signals having wavelengths different from the one wavelength comprises the step launching the optical signals through a Wavelength Division Multiplexer onto the at least one optical link.

12. The method of claim 10 wherein the step of receiving the at least one optical signal further comprises the steps of receiving other optical signals having wavelengths different from the one wavelength.

13. The method of claim 12 wherein the step of receiving the at least one optical signal having one wavelength and other optical signals having wavelengths different from the one wavelength comprise the step of allowing the optical signals to pass through a Wavelength Division Multiplexer (e.g., 126, 128) and onto a receiver.

14. The method of claim 10 wherein the step of analyzing the at least one optical signal further comprises the step of detecting any degradation in the at least one optical signal.
